(19) Europäisches Patentamt / European Patent Office / Office européen des brevets

(11) **EP 2 441 056 B1**

(12) **EUROPÄISCHE PATENTSCHRIFT**

(45) Veröffentlichungstag und Bekanntmachung des Hinweises auf die Patenterteilung:
**01.07.2020 Patentblatt 2020/27**

(21) Anmeldenummer: **10725020.1**

(22) Anmeldetag: **28.05.2010**

(51) Int Cl.:
**G07D 7/00** (2016.01)

(86) Internationale Anmeldenummer:
**PCT/EP2010/003252**

(87) Internationale Veröffentlichungsnummer:
**WO 2010/142386 (16.12.2010 Gazette 2010/50)**

(54) **VERFAHREN ZUR AUSSONDERUNG VON ABGENUTZTEN BANKNOTEN AUS EINER ANZAHL VON BANKNOTEN IN BANKNOTENVERARBEITUNGSMASCHINEN**

METHOD FOR SEPARATING WORN BANK NOTES FROM A QUANTITY OF BANK NOTES IN BANK NOTE PROCESSING MACHINES

PROCÉDÉ DE TRIAGE DE BILLETS DE BANQUE USÉS À PARTIR D'UNE PLURALITÉ DE BILLETS DE BANQUE, DANS DES MACHINES DE TRAITEMENT DE BILLETS DE BANQUE

(84) Benannte Vertragsstaaten:
**AL AT BE BG CH CY CZ DK EE ES FI FR GB GR HR HU IE IS IT LI LT LU LV MC MK MT NL NO PL PT RO SE SI SK SM TR**

(30) Priorität: **09.06.2009 DE 102009024872**

(43) Veröffentlichungstag der Anmeldung:
**18.04.2012 Patentblatt 2012/16**

(73) Patentinhaber: **CI Tech Sensors AG**
**3400 Burgdorf (CH)**

(72) Erfinder: **STÖCKLI, Armin**
**CH-3063 Ittigen (CH)**

(74) Vertreter: **Viering, Jentschura & Partner mbB**
**Patent- und Rechtsanwälte**
**Am Brauhaus 8**
**01099 Dresden (DE)**

(56) Entgegenhaltungen:
**EP-A1- 0 779 604     EP-A1- 1 542 173**
**WO-A1-2005/124701     CH-A5- 640 433**
**US-A1- 2005 239 207**

EP 2 441 056 B1

## Beschreibung

Die Erfindung geht aus von einem Verfahren zur Aussonderung von abgenutzten Banknoten aus einer Anzahl n von Banknoten in Banknotenverarbeitungsmaschinen.

In Banknotenverarbeitungsmaschinen, wie beispielsweise Vorrichtungen zum Prüfen, Zählen und Verpacken von Banknoten und Bankautomaten zum Ein- und/ oder Auszahlen von Banknoten an Bankkunden, werden abgenutzte Banknoten automatisch aus dem Umlauf entfernt. Eine Abnutzung liegt zum Beispiel bei einer Verschmutzung oder Alterung der Banknote vor. Ferner ist eine Abnutzung oder ein Verschleiß einer Banknote gegeben, wenn die Banknote abgegriffen, schlaff oder eingerissen ist oder wenn die Banknote eine große Anzahl von Faltkanten aufweist. Um die abgenutzten Banknoten während der Bearbeitung zu erkennen, sind Banknotenverarbeitungsmaschinen mit Sensoren ausgestattet. Diese Sensoren messen den Wert einer oder mehrerer physikalischen Größen der Banknoten, die Aufschluss über den Zustand der Banknoten geben. Eine derartige physikalische Größe ist zum Beispiel die optische Dichte. Zu dem Messwert der physikalischen Größe wird eine Schwelle oder ein Schwellenwert vorgegeben. Wird dieser Schwellenwert bei einer Banknote erreicht oder überschritten, so wird diese Banknote ausgesondert. Wird der Schwellenwert unterschritten, so bleibt die Banknote im Umlauf. Von dem Schwellenwert und von den Sensoren hängt ab, welcher Anteil an Banknoten aus einer Anzahl von Banknoten ausgesondert wird.

Der Schwellenwert kann von einem Bediener oder einem Hersteller einer Banknotenverarbeitungsmaschine vorgegeben werden. Da der Anteil der ausgesonderten Banknoten sehr empfindlich von der Höhe des Schwellenwertes abhängt, führt ein geringfügig zu hoch angesetzter Schwellenwert dazu, dass Banknoten im Umlauf bleiben, die aufgrund ihrer Abnutzung nicht mehr geeignet sind. Der Anteil oder die Rate der ausgesonderten Banknoten ist in diesem Fall zu klein. Wird der Schwellenwert dagegen geringfügig zu klein angesetzt, so werden Banknoten ausgesondert, die noch für den Umlauf geeignet sind. In diesem Fall ist der Anteil oder die Rate an ausgesonderten Banknoten zu groß. Da bereits eine geringfügige Änderung des Schwellenwertes die Rate der ausgesonderten Banknote empfindlich beeinflusst, und die Auswirkung der Änderung erst nach einer großen Anzahl von überprüften Banknoten nachweisbar ist, ist eine Anpassung des Schwellenwertes durch den Hersteller oder Bediener erschwert und führt zu schlechten Ergebnissen.

Auch die Festlegung eines Schwellenwertes aus mindestens zwei oder mehr durch einen Benutzer ausgewählten Banknoten, von denen mindestens eine nach seiner Auffassung eindeutig abgenutzt und mindestens eine weitere nach seiner Auffassung eindeutig für den Umlauf geeignet ist, kann zu einer zu großen oder zu kleinen Rate an ausgesonderten Banknoten führen. Bei diesem Vorgehen hängt die Rate entscheidend vom Zustand der ausgewählten Banknoten ab.

Die WO 20051124701 A1 offenbart ein Verfahren für die Einstellung einer Bankenbearbeitungsmaschine, bei dem Schwellenwerte von Sensoren für die Erkennung des Zustandes von Banknoten festgelegt werden. Dabei sollen umlauffähige Banknoten von nicht umlauffähigen Banknoten getrennt werden. Hierzu werden bei der Bearbeitung einer Anzahl von Banknoten Daten mindestens eines Sensors gespeichert. Aus den gespeicherten Daten und mindestens einem Schwellenwert wird der Zustand der Banknoten erkannt. Der Zusammenhang zwischen dem erkannten Zustand der Banknoten und dem mindestens einem Schwellenwert wird bestimmt und angezeigt. Anschließend wird der Schwellenwert verändert und die vorhergehenden Schritte werden wiederholt. Bei einer Veränderung der Schwellenwerte wird erneut eine Bearbeitung der Banknoten vorgenommen. Sind die Daten der Sensoren der Messeinrichtung im Speicher der Steuereinrichtung abgelegt, so kann auf eine erneute physische Bearbeitung verzichtet werden. Die Bearbeitung der Banknoten erfolgt in diesem Fall nur in einer Steuereinrichtung. Die Veränderung der Schwellenwerte und die Bearbeitung aller Banknoten wird so oft wiederholt, bis ein gewünschtes Ergebnis erzielt wird.

Die CH 640 433 A5 offenbart eine Vorrichtung zur Unterscheidung von Prüfobjekten. Dabei werden von den Prüfobiekten Messwerte erfasst. Die Messwerte werden mit einem oder mehreren Grenzwerten verglichen, um eine Gut-Schlecht-Entscheidung zu erhalten. Für die statistische Verarbeitung jedes Messwertes eines als gut befundenen Prüfobjektes ist ein Rechenwerk vorhanden, das in seinem Speicher Werte von zuvor geprüften Prüfobiekten, einen vorgegebenen Gewichtungsfaktor und einen vorgegebenen Toleranzfaktor enthält. Nach jeder Prüfung eines Prüfobjektes werden die Grenzwerte für den Prüfvorgang aus den vorhergehenden Messwerten, dem Gewichtungsfaktor und dem Toleranzfaktor neu berechnet. Der Gewichtungsfaktor bestimmt dabei den Einfluss, den der neue Messwert bei der Rechnung gegenüber den im Rechenwerk gespeicherten Werten haben soll. Der Toleranzfaktor dient der Festlegung der Größe des Streubereichs.

Der vorliegenden Erfindung liegt die Aufgabe zugrunde, ein Verfahren zur Aussonderung von abgenutzten Banknoten aus einer Anzahl n von Banknoten in Banknotenverarbeitungsmaschinen zur Verfügung zu stellen, bei dem eine automatische Einstellung des Schwellenwertes für eine den Zustand der Abnutzung charakterisierende physikalische Eigenschaft der Banknoten erfolgt.

Diese Aufgabe wird durch ein Verfahren mit den Merkmalen des Anspruchs 1 gelöst. Das Verfahren sieht vor, dass zu Beginn einer Erfassung von einer Anzahl n von Banknoten in Banknotenverarbeitungsmaschinen eine Sollrate$_{Cunfit,o}$ an auszusondernden Banknoten vorgegeben wird. Die Banknoten werden nacheinander erfasst. Beim Erfassen werden die Banknoten gezählt. Darüber hinaus wird beim Erfassen der Wert mindestens einer physikalischen, durch die Abnutzung beeinflussten Größe jeder Banknote durch Messung bestimmt. Der

Messwert oder ein daraus abgeleiteter Wert jeder Banknote wird mit einem Schwellenwert während des Erfassens verglichen. Liegt der Messwert über dem Schwellenwert, wird die betreffende Banknote ausgesondert. Liegt der Messwert unter dem Schwellenwert, bleibt sie im Umlauf. Entspricht der Messwert oder der daraus abgeleitete Wert dem Schwellenwert kann die Banknote entweder ausgesondert oder weiter verwendet werden. Dies kann festgelegt werden. Während des Erfassens werden die ausgesonderten Banknoten gezählt. Der Schwellenwert für die erste zu erfassende Banknote wird vorgegeben. Nach jeder Banknote oder nach jeweils einer fest vorgegebenen Anzahl m von Banknoten wird der Schwellenwert adaptiv angepasst durch eine Regelung mit Rückkopplung. m ist dabei genau wie n eine natürliche, positive Zahl. m ist sehr klein gegenüber n. Typischerweise ist m < 10. Die Regelgröße der Regelung entspricht der Rate $c_{unfit,i}$ der bis zu dieser Banknote ausgesonderten Banknoten. Die Stellgröße entspricht dem Schwellenwert. Der Schwellenwert wird so angepasst, dass der Betrag der Differenz aus $c_{unfit,i}$ und $c_{unfit,0}$ minimiert wird.

Bei dem Verfahren wird ausgenutzt, dass die Rate $c_{unfit,i}$ nach einem Anfangs- oder Übergangsverhalten gegen die vorgegebene Rate $c_{unfit,0}$ konvergiert und das System sich damit auf die Sollrate $c_{unfit,0}$ einstellt. Die Einstellung auf die Sollrate erfolgt auch dann, wenn hintereinander eine gewisse Anzahl an Banknoten in einem sehr schlechten oder einem sehr guten Zustand erfasst wird. Wesentlich ist lediglich, dass die Anzahl n groß genug ist um das Übergangsverhalten abklingen zu lassen.

Das Verfahren und die Einstellung der Sollrate ist nach Abschluss des Übergangsverhaltens unabhängig von einem vorgegebenen Schwellenwert und von einer Einstellung des Schwellenwertes durch einen Bediener oder Hersteller. Eine Konvergenz stellt sich auch dann ein, wenn der zu Beginn des Verfahrens vorgegebene Schwellenwert ungeeignet ist.

Da zu Beginn der Verfahrens ein Schwellenwert und eine Sollrate vorgegeben wird, ist sichergestellt, dass in jedem Fall Banknoten ausgesondert werden. Dies erfolgt auch dann, wenn alle Banknoten neu sind und daher noch keine Abnutzung aufweisen. Dies ist jedoch unkritisch, da aufgrund von Vorschriften lediglich garantiert sein muss, dass abgenutzte Banknoten aus dem Umlauf entfernt werden.

Ein weiterer Vorteil des erfindungsgemäßen Verfahrens besteht darin, dass an den Sensor zur Erfassung der Messgröße keine hohen Anforderungen hinsichtlich der Messgenauigkeit und der Empfindlichkeit gestellt werden. Es kann daher ein kostengünstiger Sensor verwendet werden, der eine gewisse Robustheit aufweist. Da die Messung keine hohe Genauigkeit aufweisen muss, kann die Messdauer verkürzt und der Durchlauf der Erfassung beschleunigt werden.

Nach einer vorteilhaften Ausgestaltung der Erfindung wird als physikalische Eigenschaft der Wert der optischen Dichte in zumindest einem Abschnitt jeder Banknote bestimmt. Die optische Dichte gibt Aufschluss über den Grad der Verschmutzung einer Banknote. Sie ist bei neuen Banknoten gering und nimmt mit steigender Verschmutzung zu. Die optische Dichte einer Banknote wird bevorzugt in einem unbedruckten Abschnitt bestimmt. Auf diese Weise ist die optische Dichte bei Banknoten mit unterschiedlichem Wert derselben Währung vergleichbar.

Nach einer weiteren vorteilhaften Ausgestaltung der Erfindung wird die optische Dichte mittels mindestens einer Lichtquelle und mindestens einem optischen Sensors bestimmt. Mit dem optischen Sensor wird beispielsweise das durch die Lichtquelle emittierte und durch eine Banknote reflektierte und/ oder durch eine Banknote transmittierte Licht gemessen. Im ersten Fall wird das Auflicht und im zweiten Fall das Durchlicht durch den Sensor erfasst.

Die Rate $c_{unfit,i}$ wird aus der Anzahl aller bis zu dieser Banknote erfassten Banknoten einerseits und der Anzahl der bis zu dieser Banknote ausgesonderten Banknoten andererseits berechnet. Im einfachsten Fall entspricht die Rate $c_{unfit,i}$ dem Quotient aus der Anzahl der bis zu dieser Banknote ausgesonderten Banknoten einerseits und der Anzahl i aller bis zu dieser Banknote erfassten Banknoten.

Nach einer weiteren vorteilhaften Ausgestaltung der Erfindung wird die Rate $c_{unfit,i}$ als Mittelwert aus den Raten $c_{unfit,0}$ $c_{unfit,1}$, $c_{unfit,2}$, $c_{unfit,3}$, .... $c_{unfit,i-1}$ der vorhergehenden Banknoten berechnet. Dabei kann der arithmetische, geometrische oder harmonische Mittelwert berechnet werden. Neben dem Mittelwert kann auch der Median berechnet werden, der robuster gegen Ausreißer ist.

Nach einer weiteren vorteilhaften Ausgestaltung der Erfindung ist die Regelung eine adaptive Regelung. Gegenüber einer normalen Regelung hat die adaptive Regelung den Vorteil, dass sie auch größere Änderungen hinsichtlich der gemessenen Größe ausgleichen kann.

Nach einer weiteren vorteilhaften Ausgestaltung der Erfindung ist die Regelung eine Fuzzy-Regelung. Bei der Fuzzy-Regelung werden der Regelgröße, dem Regelfehler und dem Stellwert symbolische Werte anstelle numerischer Werte zugewiesen. Die Fuzzy-Regelung basiert auf einer Fuzzy-Logik.

Gemäß der Erfindung wird bei der Berechnung des Schwellenwertes der Betrag der Differenz aus der Rate $c_{unfit,0}$ und der Rate $c_{unfit,i}$ minimiert.

Nach einer weiteren vorteilhaften Ausgestaltung der Erfindung wird zur Berechnung des Schwellenwertes und/ oder der Rate $c_{unfit,i}$ ein IIR-Filter eingesetzt. Dabei handelt es sich um ein zeitdiskretes lineares verschiebungsinvariantes Filter bei der digitalen Signalverarbeitung.

Nach einer weiteren vorteilhaften Ausgestaltung der Erfindung wird zur Berechnung des Schwellenwertes und/ oder der Rate $c_{unfit,i}$ ein Kalman-Filter eingesetzt. Mithilfe dieses Filters sind bei fehlerbehafteten Messwerten Rückschlüsse auf den exakten Zustand möglich. Störungen, welche bei der Messung auftreten, können eliminiert werden.

Nach einer weiteren vorteilhaften Ausgestaltung der Erfindung wird ein Intervall für den Schwellenwert vorgegeben. Dadurch wird verhindert, dass sich der Schwellenwert zu stark ändert.

Nach einer weiteren vorteilhaften Ausgestaltung der Erfindung werden mehrere Sollraten $c_{unfit,0}$ vorgegeben. Der Bediener kann zwischen den verschiedenen Sollraten auch während der Erfassung der Banknoten wechseln.

Weitere Vorteile und vorteilhafte Ausgestaltungen der Erfindung sind der nachfolgenden Beschreibung, der Zeichnung und den Ansprüchen zu entnehmen.

Zeichnung

In der Zeichnung ist ein Ausführungsbeispiel der Erfindung anhand eines Flussdiagramms dargestellt. Es zeigt:

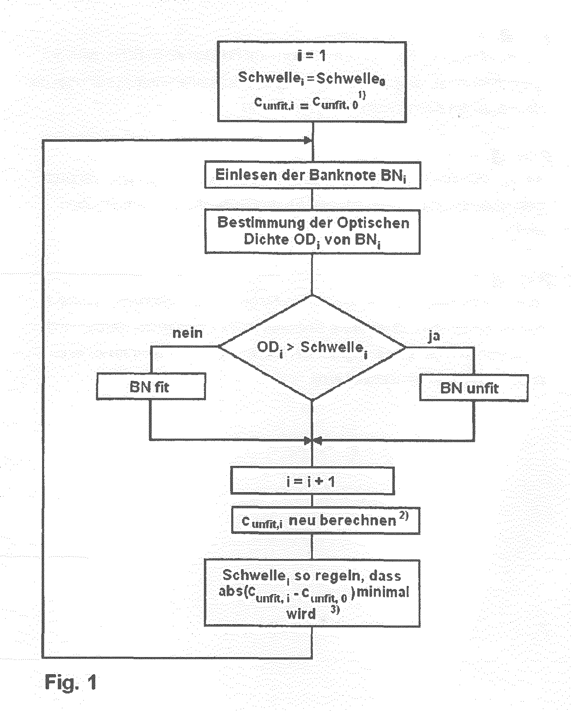

Figur 1    Flussdiagramm eines Verfahrens zur Aussonderung von abgenutzten Banknoten.

Beschreibung des Ausführungsbeispiels

Figur 1 zeigt in einem Flussdiagramm den Ablauf der Verfahrensschritte zur Aussonderung von abgenutzten Banknoten aus einer Gesamtheit von n Banknoten. Zu Beginn wird der Zähler i auf 1 gesetzt. Der Schwellenwert $Schwelle_0$ für die erste Banknote wird vorgegeben: $Schwelle_i$ mit i=1 entspricht $Schwelle_0$. Ferner wird die Sollrate $c_{unfit,0}$ der auszusondernden Banknoten vorgegeben und für i=1 die Rate $c_{unfit,i} = c_{unfit,0}$ gesetzt. Dann wird die erste Banknote $BN_1$ erfasst und die optische Dichte $OD_1$ der ersten Banknote $BN_1$ bestimmt. Die optische Dichte $OD_1$ wird anschließend mit dem Schwellenwert $Schwelle_1$ verglichen. Dabei wird abgefragt, ob $OD_1 > Schwelle_1$ ist. Ist dies erfüllt, so wird die Banknote $BN_1$ als abgenutzt bzw. unfit eingestuft. Für diesen Fall gilt $BN_1\_unfit = 1$. $BN_1$ wird ausgesondert und aus dem Umlauf entfernt. Hierzu wird sie in ein spezielles Fach der Banknotenverarbeitungsmaschine eingelegt. Gilt für $BN_1$ nicht: $OD_1 > Schwelle_1$, so bleibt $BN_1$ im Umlauf und wird nicht ausgesondert. In diesem Fall ist $BN_1$ fit oder $BN_1\_fit = 1$ oder $BN_1\_unfit = 0$. Anschließend wird der Zähler um 1 erhöht: i=i+1. Der Zähler lautet nun i=2. Die aktuelle Rate $c_{unfit,2}$ der ausgesonderten Banknoten wird berechnet aus der vorhergehenden Rate $c_{unfit,1}$.

$$c_{unfit,i+1} = (BN_i\_unfit) * w + c_{unfit,i} * (1-w)$$

wobei:

$BN_i\_unfit = 1$, wenn $BN_i$ ausgesondert wurde und $BN_i\_unfit = 0$, wenn $BN_i$ nicht ausgesondert wurde. Ein typischer Wert für w liegt bei w = 1/2000.

Schließlich wird der Schwellenwert durch Regelung angepasst, so dass der Betrag der Differenz aus $c_{unfit,i}$ und $c_{unfit,0}$ minimal ist. Daraus ergibt sich der Schwellenwert $Schwelle_i$ mit i = 2 für die Erfassung der Banknote $BN_2$.

Diese Verfahrensschritte werden für alle Banknoten $BN_1$ bis $BN_n$ durchgeführt. Dabei durchläuft i alle natürlichen Zahlen von 1 bis n.

**Patentansprüche**

1.    Verfahren zur Aussonderung von abgenutzten Banknoten aus einer Anzahl n von Banknoten in Banknotenverarbeitungsmaschinen mit folgenden Verfahrensschritten:

Erfassen der n Banknoten nacheinander,
Zählen der n Banknoten während des Erfassens,
Messen des Wertes mindestens einer physikalischen, durch die Abnutzung beeinflussten Größe jeder Banknote während des Erfassens,
Vergleich des Messwertes oder eines daraus abgeleiteten Wertes jeder Banknote mit einem Schwellenwert während des Erfassens,
Aussondern von Banknoten bei Überschreiten des Schwellenwertes während des Erfassens,
Zählen der ausgesonderten Banknoten während des Erfassens,
**dadurch gekennzeichnet,**
**dass** eine Sollrate $c_{unfit,0}$ an auszusondernden Banknoten vorgegeben wird,
und **dass** nach dem Erfassen jeder Banknote oder nach jeweils einer fest vorgegebenen Anzahl m«n von Banknoten die Rate $c_{unfit, i}$ der bis zu dieser Banknote ausgesonderten Banknoten, aus der Anzahl aller der bis zu dieser Banknote erfassten Banknoten einerseits und der Anzahl der bis zu dieser Banknote ausgesonderten Banknoten andererseits berechnet wird und der Schwellenwert durch Regelung mit Rückkopplung angepasst wird, wobei die Regelgrösse die Rate $c_{unfit, i}$ und die Stellgrösse der Schwellenwert ist, so dass bei der Berechnung des Schwellenwertes der Betrag der Differenz aus der Rate $c_{unfit, 0}$ und der Rate $c_{unfit, i}$ minimiert wird.

2.    Verfahren nach Anspruch 1, **dadurch gekenn-**

zeichnet, dass als physikalische Eigenschaft die optische Dichte in zumindest einem Abschnitt jeder Banknote bestimmt wird.

3. Verfahren nach Anspruch 2, **dadurch gekennzeichnet, dass** die optische Dichte mittels mindestens einer Lichtquelle und mindestens einem optischen Sensor bestimmt wird.

4. Verfahren nach Anspruch 3, **dadurch gekennzeichnet, dass** mit dem optischen Sensor das durch Lichtquelle emittierte und durch eine Banknote reflektierte und/ oder durch eine Banknote transmittierte Licht gemessen wird.

5. Verfahren nach Anspruch 1, **dadurch gekennzeichnet, dass** die Rate $c_{unfit,i}$ als Mittelwert aus den Raten der vorhergehenden Banknoten berechnet wird.

6. Verfahren nach einem der vorhergehenden Ansprüche, **dadurch gekennzeichnet, dass** die Regelung eine adaptive Regelung ist.

7. Verfahren nach einem der Ansprüche 1 bis 5, **dadurch gekennzeichnet, dass** die Regelung eine Fuzzy-Regelung ist.

8. Verfahren nach einem der vorhergehenden Ansprüche, **dadurch gekennzeichnet, dass** zur Berechnung des Schwellenwertes und/ oder der Rate $c_{unfit,i}$ ein IIR-Filter eingesetzt wird.

9. Verfahren nach einem der vorhergehenden Ansprüche, **dadurch gekennzeichnet, dass** zur Berechnung des Schwellenwertes und/ oder der Rate $c_{unfit,i}$ ein Kalman-Filter eingesetzt wird.

10. Verfahren nach einem der vorhergehenden Ansprüche, **dadurch gekennzeichnet, dass** ein Intervall für den Schwellenwert vorgegeben wird.

11. Verfahren nach einem der vorhergehenden Ansprüche, **dadurch gekennzeichnet, dass** mehrere Sollraten $c_{unfit,0}$ vorgegeben werden und dass während der Erfassung der Banknoten von einer Sollrate zu einer anderen Sollrate gewechselt wird.

**Claims**

1. Method for separating out worn banknotes from a number n of banknotes in banknote processing machines, having the following method steps:

sequentially capturing the n banknotes,
counting the n banknotes during the capturing,
measuring the value of at least one physical variable, influenced by the wear, of each banknote during the capturing,
comparing the measurement value or a value derived therefrom of each banknote to a threshold value during the capturing,
separating out banknotes if the threshold value is exceeded during the capturing,
counting the separated-out banknotes during the capturing,
**characterized in that** a target rate $c_{unfit,0}$ of banknotes that are to be separated out is specified,
and **in that**, after capturing each banknote or after in each case a fixedly specified number of $m \ll n$ of banknotes, the rate $c_{unfit,i}$ of the banknotes that have been separated out up to this banknote is calculated from the number of all the banknotes that have been captured up to this banknote and from the number of the banknotes that have been separated out up to this banknote, and the threshold value is adapted by feedback control, wherein the control variable is the rate $c_{unfit,i}$ and the manipulated variable is the threshold value, with the result that the absolute value of the difference from the rate $c_{unfit,0}$ and the rate $c_{unfit,i}$ is minimized in the calculation of the threshold value.

2. Method according to Claim 1, **characterized in that** the optical density is determined as the physical property in at least one portion of each banknote.

3. Method according to Claim 2, **characterized in that** the optical density is determined using at least one light source and at least one optical sensor.

4. Method according to Claim 3, **characterized in that** the light which is emitted by the light source and reflected by a banknote and/or transmitted by a banknote is measured using the optical sensor.

5. Method according to Claim 1, **characterized in that** the rate $c_{unfit,i}$ is calculated as an average from the rates of the preceding banknotes.

6. Method according to one of the preceding claims, **characterized in that** the control is an adaptive control.

7. Method according to one of Claims 1 to 5, **characterized in that** the control is a fuzzy control.

8. Method according to one of the preceding claims, **characterized in that** an IIR filter is used to calculate the threshold value and/or the rate $c_{unfit,i}$.

9. Method according to one of the preceding claims, **characterized in that** a Kalman filter is used to calculate the threshold value and/or the rate $c_{unfit,i}$.

10. Method according to one of the preceding claims, **characterized in that** an interval for the threshold value is specified.

11. Method according to one of the preceding claims, **characterized in that** a plurality of target rates $c_{unfit,0}$ are specified and **in that** a switch is performed during the capturing of the banknotes from one target rate to another target rate.

## Revendications

1. Procédé de mise à l'écart par tri de billets de banque usés d'un nombre n de billets de banque dans des machines de traitement de billets de banque, comprenant les étapes de procédé suivantes :

détection de n billets de banque les uns après les autres,
comptage des n billets de banque pendant la détection,
mesure de la valeur d'au moins une grandeur physique,
influencée par l'usure, de chaque billet de banque pendant la détection,
comparaison de la valeur mesurée ou d'une valeur qui en est dérivée de chaque billet de banque avec une valeur de seuil pendant la détection,
mise à l'écart par tri des billets de banque en cas de dépassement de la valeur de seuil pendant la détection,
comptage des billets de banque mis à l'écart par tri pendant la détection,
**caractérisé en ce qu'**un taux de consigne $c_{unfit,0}$ de billets de banque à mettre à l'écart par tri est prédéfini et **en ce qu'**après la détection de chaque billet de banque ou après respectivement un nombre prédéfini fixe m « n de billets de banque, le taux $c_{unfit,i}$' de billets de banque mis à l'écart par tri jusqu'à ce billet de banque est calculé d'une part à partir du nombre de tous les billets de banque détectés jusqu'à ce billet de banque et d'autre part à partir du nombre de billets de banque mis à l'écart par tri jusqu'à ce billet de banque et la valeur de seuil est adaptée par régulation avec rétroaction, la grandeur de régulation étant le taux $c_{unfit,i}$ et la grandeur de commande étant la valeur de seuil, de sorte que lors du calcul de la valeur de seuil, la valeur absolue de la différence entre le taux $c_{unfit,0}$ et le taux $c_{unfit,i}$ est réduite au minimum.

2. Procédé selon la revendication 1, **caractérisé en ce que** la densité optique dans au moins une portion de chaque billet de banque est déterminée en tant que propriété physique.

3. Procédé selon la revendication 2, **caractérisé en ce que** la densité optique est déterminée au moyen d'au moins une source de lumière et d'au moins un capteur optique.

4. Procédé selon la revendication 3, **caractérisé en ce que** la lumière émise par la source de lumière et réfléchie par un billet de banque et/ou transmise à travers un billet de banque est mesurée avec le capteur optique.

5. Procédé selon la revendication 1, **caractérisé en ce que** le taux $c_{unfit,i}$ est calculé en tant que valeur moyenne des taux des billets de banque précédents.

6. Procédé selon l'une des revendications précédentes, **caractérisé en ce que** la régulation est une régulation adaptative.

7. Procédé selon l'une des revendications 1 à 5, **caractérisé en ce que** la régulation est une régulation à logique floue.

8. Procédé selon l'une des revendications précédentes, **caractérisé en ce qu'**un filtre IIR est utilisé pour le calcul de la valeur de seuil et/ou du taux $c_{unfit,i}$.

9. Procédé selon l'une des revendications précédentes, **caractérisé en ce qu'**un filtre de Kalman est utilisé pour le calcul de la valeur de seuil et/ou du taux $c_{unfit,i}$.

10. Procédé selon l'une des revendications précédentes, **caractérisé en ce qu'**un intervalle est prédéfini pour la valeur de seuil.

11. Procédé selon l'une des revendications précédentes, **caractérisé en ce que** plusieurs taux de consigne $c_{unfit,0}$ sont prédéfinis et qu'un changement d'un taux de consigne à un autre taux de consigne a lieu pendant la détection des billes de banque.

Fig. 1

**EP 2 441 056 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 20051124701 A1

- CH 640433 A5